(19) Europäisches Patentamt European Patent Office Office européen des brevets

(11) **EP 3 822 608 A1**

(12) **EUROPEAN PATENT APPLICATION**

(43) Date of publication:
**19.05.2021 Bulletin 2021/20**

(51) Int Cl.:
**G01M 17/007** (2006.01)     **G05D 1/00** (2006.01)

(21) Application number: **21160720.5**

(22) Date of filing: **04.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020   CN 202010606636**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventor: **ZHAO, Jun**
**Beijing, 100085 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **TESTING METHOD AND DEVICE OF AUTONOMOUS VEHICLE, ELECTRONIC APPARATUS, AND MEDIUM**

(57)     The present disclosure provides a testing method of an autonomous vehicle. The method includes: acquiring test data about a test site generated during a testing process, wherein the test data includes a corresponding relationship between a current cumulative number of problems monitored during the testing process and a current mileage of the autonomous vehicle; determining a corresponding relationship between a problem monitoring ratio and the current mileage based on the test data, wherein the problem monitoring ratio includes a ratio of the current cumulative number of problems monitored to a total number of problems monitored; and performing fitting on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site.

FIG. 2

**Description**

## TECHNICAL FIELD

The present disclosure relates to a field of autonomous driving, and in particular to a testing method and device of an autonomous vehicle, an electronic apparatus, and a non-transitory computer-readable medium.

## BACKGROUND

With rapid development of vehicle technology and electronic technology, autonomous vehicles are increasingly appearing in people's lives. An autonomous vehicle may obtain information about a traffic scene where the vehicle is located through various sensors, and determine an appropriate autonomous driving strategy based on the information about the traffic scene, so as to achieve autonomous driving of the vehicle.

In research and development of autonomous vehicles, it is usually necessary to conduct road running tests on autonomous vehicles to test various devices and programs in autonomous vehicles.

However, in the implementation of the concept of the present disclosure, the inventor found that the related technology has at least the following problems: in order to sufficiently test autonomous vehicles, a large number of autonomous vehicles are usually tested repeatedly in the same test site so as to ensure a test coverage rate, which leads to high test cost and low test efficiency.

## SUMMARY

In view of this, the present disclosure provides a testing method and device of an autonomous vehicle, an electronic apparatus, and a non-transitory computer-readable medium.

One aspect of the present disclosure provides a testing method of an autonomous vehicle, including: acquiring test data about a test site generated during a testing process, wherein the test data includes a corresponding relationship between a current cumulative number of problems monitored during the testing process and a current mileage of the autonomous vehicle; determining a corresponding relationship between a problem monitoring ratio and the current mileage based on the test data, wherein the problem monitoring ratio includes a ratio of the current cumulative number of problems monitored to a total number of problems monitored during the testing process; and performing fitting on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site during each testing process.

According to an embodiment of the present disclosure, the method further includes: determining a test mileage to be tested by using the optimized evaluation model according to an expected problem monitoring ratio; and testing the autonomous vehicle based on the test mileage to be tested.

According to an embodiment of the present disclosure, the test data further includes a problem record of a problem monitored during the testing process, and the problem record includes at least one problem description each including at least one description tag.

According to an embodiment of the present disclosure, the method further includes recording the test data about the test site generated during the testing process. The recording the test data about the test site generated during the testing process includes: determining whether a problem having the same problem record as a new problem exists in monitored problems or not, in response to monitoring the new problem during the testing process; recording the problem record of the new problem and updating the current cumulative number of problems in response to determining a problem having the same problem record as the new problem does not exist in the monitored problems; and recording the corresponding relationship between the current cumulative number of problems and the current mileage.

According to an embodiment of the present disclosure, the recording the corresponding relationship between the current cumulative number of problems and the current mileage includes: acquiring updated current cumulative number of problems and the current mileage, and recording a corresponding relationship between the updated current cumulative number of problems and the current mileage, in response to updating the current cumulative number of problems; or acquiring, periodically, the current cumulative number of problems and the current mileage, and recording the corresponding relationship between the current cumulative number of problems and the current mileage.

According to an embodiment of the present disclosure, the preset evaluation model includes an exponential model.

According to an embodiment of the present disclosure, the preset evaluation model is expressed as:

$$y = 1 - n^x$$

where y represents the problem monitoring ratio, x represents the current mileage, and n is a parameter of the preset evaluation model.

According to an embodiment of the present disclosure, the problem record includes at least one problem description selected from a static scene description, a dynamic interaction description, a dynamic interactive behavior description, and an unreasonable behavior description.

According to an embodiment of the present disclosure, the static scene description includes at least one description tag selected from a left turn at intersection, a right turn at intersection, a non-turn at intersection, a U-turn at intersection, a non-intersection travelling, a roundabout, an overpass, a branch road, a converging area, a main/auxiliary road, a ramp, and a temporary road construction. The dynamic interaction description includes at least one description tag selected from none, a vehicle, a pedestrian, a non-motor vehicle, and other obstacle. The dynamic interactive behavior description includes at least one description tag selected from none, side by side, vehicle following, lane changing, overtaking, pulling over, and starting. The unreasonable behavior description includes at least one description tag selected from unreasonable braking, braking without reason, unreasonable accelerating, too fast, too low, left and right swing, lateral deviation, position drift, too small lateral distance, positioning error, recognition error, violation of traffic regulations, redundant behavior, and inappropriate timing.

Another aspect of the present disclosure provides a testing device of an autonomous vehicle, including an acquisition module, a first determination module, and a fitting module. The acquisition module is configured to acquire test data about a test site generated during a testing process, wherein the test data includes a corresponding relationship between a current cumulative number of problems monitored during the testing process and a current mileage of the autonomous vehicle. The first determination module is configured to determine a corresponding relationship between a problem monitoring ratio and the current mileage based on the test data, wherein the problem monitoring ratio includes a ratio of the current cumulative number of problems monitored to a total number of problems monitored during the testing process. The fitting module is configured to perform fitting on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site during each testing process.

Another aspect of the present disclosure provides an electronic apparatus, including: one or more processors; and a storage device for storing one or more programs, wherein the one or more programs, when executed by the one or more processors, cause the one or more processors to perform the above-mentioned method.

Another aspect of the present disclosure provides a non-transitory computer-readable storage medium having executable instructions stored thereon, wherein the executable instructions, when executed by a processor, causes the processor to perform the above-mentioned method.

Another aspect of the present disclosure provides a computer program including computer-executable instructions that, when executed, perform the above-mentioned method.

## BRIEF DESCRIPTION OF THE DRAWINGS

The above and other objectives, features and advantages of the present disclosure will be more apparent through the following description of embodiments of the present disclosure with reference to the drawings, in which:

FIG. 1 schematically shows a system architecture of a testing method of an autonomous vehicle according to an embodiment of the present disclosure;
FIG. 2 schematically shows a flowchart of a testing method of an autonomous vehicle according to an embodiment of the present disclosure;
FIG. 3 shows a schematic diagram of an evaluation model according to an embodiment of the present disclosure;
FIG. 4 schematically shows a block diagram of a testing device of an autonomous vehicle according to an embodiment of the present disclosure; and
FIG. 5 schematically shows a block diagram of an electronic apparatus according to an embodiment of the present disclosure.

## DETAILED DESCRIPTION

Embodiments of the present disclosure will be described below with reference to the drawings. It should be understood, however, that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

The terms used herein are for the purpose of describing specific embodiments only and are not intended to limit the present disclosure. The terms "comprising", "including", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In the case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C). In the case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C).

The present disclosure provides a testing method of an autonomous vehicle, including: acquiring test data about a test site generated during a testing process, wherein the test data includes a corresponding relationship between a current cumulative number of problems monitored during the testing process and a current mileage of the autonomous vehicle; determining a corresponding relationship between a problem monitoring ratio and the current mileage based on the test data, wherein the problem monitoring ratio includes a ratio of the current cumulative number of problems monitored to a total number of problems monitored during the testing process; and performing fitting on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site during each testing process.

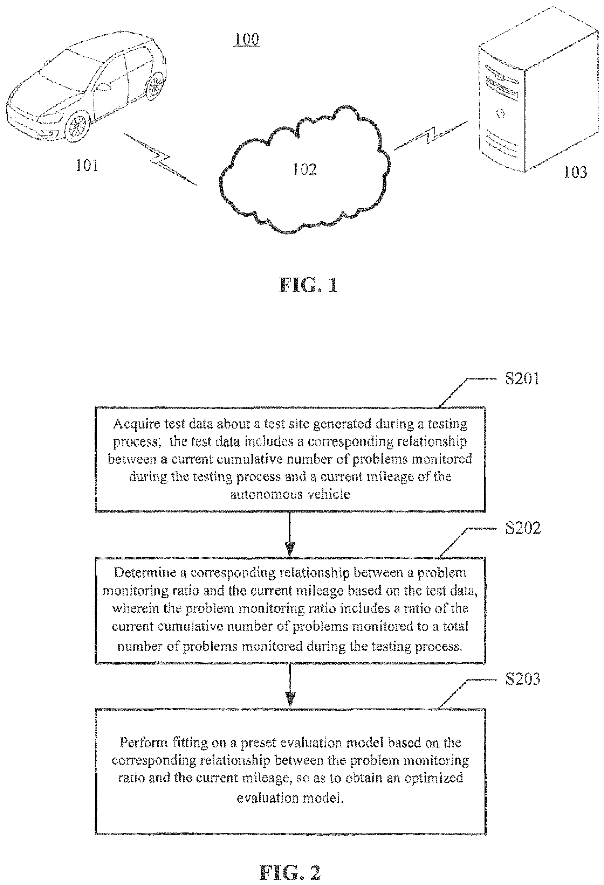

FIG. 1 schematically shows a system architecture 100 of a testing method of an autonomous vehicle according to an embodiment of the present disclosure.

It should be noted that FIG. 1 is just an example of a system architecture in which the embodiments of the present disclosure may be applied, so as to help those skilled in the art to understand the technical content of the present disclosure. It does not mean that the embodiments of the present disclosure may not be applied to other apparatuses, systems or scenes.

As shown in FIG. 1, the system architecture 100 according to this embodiment may include an autonomous vehicle 101, a network 102 and a server 103. The network 102 is a medium used to provide a communication link between the autonomous vehicle 101 and the server 103. The network 102 may include various connection types, such as wired or wireless communication links, fiber-optic cables, and so on.

According to an embodiment of the present disclosure, the autonomous vehicle 101 may be, for example, an intelligent car that achieves self-driving through a computer system. The autonomous vehicle 101 may, for example, integrate functions such as environment perception and planning decision-making. For example, a radar sensor or a monitoring device may be installed on the autonomous vehicle 101 to achieve a perception and monitoring of the surrounding environment and traffic conditions.

According to an embodiment of the present disclosure, the server 103 may be a server that provides various services. For example, the server 103 may acquire test data generated by the autonomous vehicle 101 at a test site during a testing process, and perform fitting on a preset evaluation model based on the test data.

It should be noted that the testing method of the autonomous vehicle provided by the embodiment of the present disclosure may generally be performed by the server 103. Accordingly, a testing device of an autonomous vehicle provided by the embodiment of the present disclosure may generally be arranged in the server 103.

For example, the server 103 may acquire test data about a certain test site generated by a plurality of autonomous vehicles 101 during a full testing process, and perform fitting on a preset evaluation model based on the test data, so as to obtain an optimized evaluation model. The optimized evaluation model may be used to evaluate a corresponding relationship between the problem monitoring ratio and a test mileage about the test site during each testing process.

It may be understood that it is difficult to determine when to end the test in the road test phase of the autonomous vehicle. When a huge autonomous driving system is tested in a road network that cannot be described in a regular manner, it takes a huge price to find all the problems. When the problem monitoring ratio is far out of proportion to the test mileage, continuing the test will reduce the test efficiency and waste manpower and material resources.

In view of this, the optimized evaluation model obtained by the embodiment of the present disclosure may be used to evaluate the corresponding relationship between the problem monitoring ratio and the test mileage about the test site during each testing process, so that the effectiveness of the road test may be evaluated quantitatively. Therefore, an appropriate test mileage may be determined based on the optimized evaluation model of the embodiment of the present disclosure, and the test may be ended after the test mileage is completed, which ensures an adequacy of the test, improves a test efficiency, and saves a test cost.

It should be understood that the number of autonomous vehicle and server in FIG. 1 is merely illustrative. According to actual needs, there may be any number of autonomous vehicles and servers.

FIG. 2 schematically shows a flowchart of a testing method of an autonomous vehicle according to an embodiment of the present disclosure.

As shown in FIG. 2, the method includes operations S201~S203.

In operation S201, the test data about the test site generated during the testing process is acquired, and the test data includes the corresponding relationship between the current cumulative number of problems monitored during the testing process and the current mileage of the autonomous vehicle.

According to the embodiment of the present disclosure, the testing process about the test site may be, for example, a full testing process about the test site. For example, it is possible to acquire the test data generated during the testing process in which the test mileage of the test site is greater than a first threshold and/or the number of problems monitored is greater than a second threshold, so as to obtain more complete data about the test site generated in the full testing process.

According to the embodiment of the present disclosure, the test data generate may be recorded during the testing process, so that the test data may be subsequently processed.

For example, during the testing process, each vehicle under test may monitor whether the vehicle itself has a problem, and generate a problem record about the problem in response to occurrence of the problem. For example, the autonomous vehicle may monitor whether an unreasonable driving behavior occurs in the autonomous vehicle, and generate a problem record about the unreasonable driving behavior if the unreasonable driving behavior occurs.

In the embodiment of the present disclosure, the problem record may include at least one problem description each including at least one description tag. For example, the problem record may include at least one problem description selected from a static scene description, a dynamic interaction description, a dynamic interactive behavior description, and an unreasonable behavior description when the problem occurs. The static scene description may include at least one description tag selected from a left turn at intersection, a right turn at intersection, a non-turn at intersection, a U-turn at intersection, a non-intersection travelling, a roundabout, an overpass, a branch road, a converging area, a main/auxiliary road, a ramp, and a temporary road construction. The dynamic interaction description may include at least one description tag selected from none, a vehicle, a pedestrian, a non-motor vehicle, and other obstacle. The dynamic interactive behavior description may include at least one description tag selected from none, side by side, vehicle following, lane changing, overtaking, pulling over, and starting. The unreasonable behavior description may include at least one description tag selected from unreasonable braking, braking without reason, unreasonable accelerating, too fast, too low, left and right swing, lateral deviation, position drift, too small lateral distance, positioning error, recognition error, violation of traffic regulations, redundant behavior, and inappropriate timing.

According to the embodiment of the present disclosure, by standardizing the problem description contained in the problem record and presetting the description tag for each problem description, the problem record generated may have a standardized content, so as to determine whether there is the same problem through the problem record. For example, the problem record of problem 1 monitored may be {left turn at intersection, vehicle, side by side, too small lateral distance}, the problem record of problem 2 may be {left turn at intersection, vehicle, vehicle following, redundant behavior}, and the problem record of problem 3 may be {left turn at intersection, vehicle, side by side, too small lateral distance}. Then, problem 3 and problem 1 are the same problem, and problem 2 and problem 1 are different problems.

In the embodiment of the present disclosure, it is determined whether a problem having the same problem record as a new problem exists in monitored problems or not, in response to monitoring the new problem during the testing process. If it is determined a problem having the same problem record as the new problem does not exist in the monitored problems, the problem record of the new problem is recorded and the current cumulative number of problems is updated, and the corresponding relationship between the current cumulative number of problems and the current mileage is recorded.

For example, a problem record of a problem may be generated in response to monitoring that the problem occurs in the autonomous vehicle. Then, it is determined, based on the problem record, whether the same problem exists in the problems that have been previously monitored. If the same problem exists, it means that the problem has been discovered, and the problem may not be recorded and processed. If the same problem does not exist, it means that the problem is a new problem that has not been discovered, then a problem record of the new problem may be recorded and the current cumulative number of problems may be updated.

In the embodiment of the present disclosure, in response to updating the current cumulative number of problems, updated current cumulative number of problems and the current mileage may be acquired, and a corresponding relationship between the updated current cumulative number of problems and the current mileage may be recorded.

For example, at a first time in the testing process, problem 1 is monitored, then the problem record of problem 1 may be recorded, and the current cumulative number of problems may be updated to 1. The current mileage $S_1$ corresponding to the first time is acquired, and the corresponding relationship between the current cumulative number of problems 1 and the current mileage $S_1$ is recorded. At a second time after the first time, problem 2 is monitored, then whether problem 2 is the same problem as problem 1 is determined through the problem records of problem 1 and problem 2. If same, no processing is performed. If different, the problem record of problem 2 may be recorded, and the current cumulative number of problems is updated to 2. The current mileage $S_2$ corresponding to the second time is acquired, and the corresponding relationship between the current cumulative number of problems 2 and the current mileage $S_2$ is recorded. At a third time after the second time, problem 3 is monitored, then whether problem 3 is the same problem as problem 1 or problem 2 is determined through the problem records of problem 1, problem 2 and problem 3. If same, no processing is performed. If different, the problem record of problem 3 may be recorded, and the current cumulative number of problems is updated to 3. The current mileage $S_3$ corresponding to the third time is acquired, and the corresponding relationship between the current cumulative number of problems 3 and the current mileage $S_3$ is recorded. It may be understood that if multiple tested vehicles participate in the testing process, the current cumulative number of problems is the cumulative number of different problems monitored by all the tested vehicles participating in the test, and the current mileage is a sum of the mileages of all the tested vehicles participating in the test.

In another embodiment of the present disclosure, the current cumulative number of problems and the current mileage may be acquired periodically, and the corresponding relationship between the current cumulative number of problems and the current mileage may be recorded.

For example, the cycle may be one day. After the test on the first day is completed, the problem records of all problems monitored by each tested vehicle on the first day and the mileage sum $S_1$ of each tested vehicle on the first day may be obtained. The number of different problems is determined as the current cumulative number of problems $X_1$ based on the problem records, and the corresponding relationship between $X_1$ and $S_1$ is recorded. After the test on the second day is completed, the problem records of all problems monitored by each tested vehicle on the second day and the mileage sum S2 of each tested vehicle on the second day may be obtained. The number of different problems of all the problems monitored on the first and second days is determined as the current cumulative number of problems $X_2$ based on the problem records, and the corresponding relationship between $X_2$ and $(S_1+S_2)$ is recorded.

It may be understood that the present disclosure does not limit the method of recording the corresponding relationship between the current cumulative number of problems and the current mileage, and those skilled in the art may make settings according to the actual situation. For example, the method of the former embodiment of the present disclosure has higher granularity, which may obtain more data and improve fitting accuracy, while the method of the latter embodiment of the present disclosure has lower granularity, which may save computing resources and improve calculation efficiency.

According to the embodiment of the present disclosure, the server may acquire the problem records and the current mileage recorded by each tested vehicle after the end of the test on each day, so as to determine the corresponding relationship between the current cumulative number of problems and the current mileage. Alternatively, the server may also, in response to that a certain tested vehicle monitors that a problem occurs in the tested vehicle, obtain the problem record of the problem and the current mileage of all vehicles, so as to determine the corresponding relationship between the current cumulative number of problems and the current mileage. The present disclosure does not limit this, and those skilled in the art may make settings according to the actual situation. The present disclosure only requires that the test data acquired includes a plurality of corresponding relationships between the current cumulative number of problems and the current mileage, so as to perform fitting on the model.

In operation S202, a corresponding relationship between a problem monitoring ratio and the current mileage is determined based on the test data, wherein the problem monitoring ratio includes a ratio of the current cumulative number of problems monitored to a total number of problems monitored during the testing process.

According to the embodiment of the present disclosure, it is possible to obtain the total number of all different problems monitored, X, during the test, and the corresponding relationship between the current cumulative number of problems $X_i$ and the current mileage $S_i$. Accordingly, the corresponding relationship between the problem monitoring ratio and the current mileage may be determined based on the total number of problems X and the corresponding relationship between the current cumulative number of problems $X_i$ and the current mileage Si, for example, as shown in Table 1, where X is the total number of problems monitored during the testing process, and S is the total mileage during the testing process.

Table 1 Corresponding Relationship between Current Cumulative Number of Problems and Current Mileage

| Current cumulative number of problems | Current mileage | Problem monitoring ratio |
|---|---|---|
| $X_1$ | $S_1$ | $X_1/X$ |

(continued)

| Current cumulative number of problems | Current mileage | Problem monitoring ratio |
|---|---|---|
| $X_2$ | $S_2$ | $X_2/X$ |
| ... | ... | ... |
| X | S | X/X |

In operation S203, fitting is performed on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site during each testing process.

According to the embodiment of the present disclosure, the preset evaluation model includes an exponential model. For example, the preset evaluation model is expressed as:

$$y = 1 - n^x$$

where y represents the problem monitoring ratio, x represents the current mileage, and n is a parameter of the preset evaluation model.

In the embodiment of the present disclosure, the above steps may be performed to obtain the corresponding relationship between each problem monitoring ratio and the current mileage, perform fitting on the preset evaluation model, and obtain a value of the model parameter n for the test site, so as to obtain the optimized evaluation model about the test site.

According to the embodiment of the present disclosure, the preset evaluation model fitted based on the test data generated during the testing process at a different site has a different parameter n. That is, the optimized evaluation model obtained by the embodiment of the present disclosure may be used to evaluate the corresponding relationship between the problem monitoring ratio and the test mileage about the corresponding test site during each testing process.

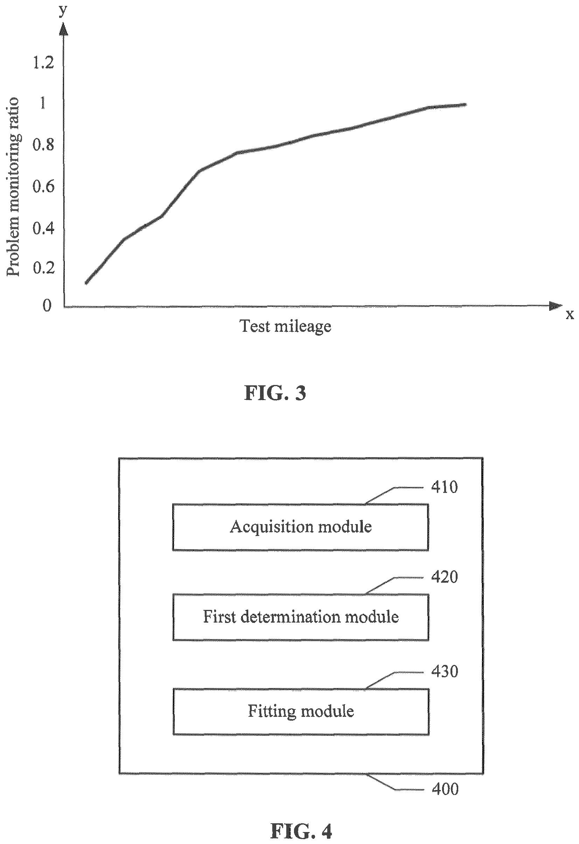

For example, FIG. 3 shows a schematic diagram of an evaluation model according to an embodiment of the present disclosure. As shown in FIG. 3, the evaluation model fitted has an abscissa x representing the test mileage, and an ordinate y representing the problem monitoring ratio.

In the embodiment of the present disclosure, in the subsequent repeated debugging and testing of the test site, the evaluation model fitted may be used to determine the mileage to be tested. After the mileage to be tested is reached, the test may be completed.

For example, the test mileage to be tested may be determined by using the optimized evaluation model according to an expected problem monitoring ratio, and the autonomous vehicle may be tested based on the test mileage to be tested.

For example, in the model shown in FIG. 3, a slope of the curve decreases as the abscissa x increases. That is, in the later testing process, it takes a long test mileage to discover a problem, and the test efficiency is significantly reduced.

Therefore, in the embodiment of the present disclosure, an appropriate problem monitoring ratio (for example, 80%) may be selected, and the test mileage that needs to be completed to find 80% of the problems is predicted based on the evaluation model fitted, so as to determine when to end the next test based on the test mileage during the next test.

According to the embodiment of the present disclosure, fitting may be performed on the evaluation model through historical test data about a certain test site, thereby obtaining an optimized evaluation model about the test site. The evaluation model may perform quantitative evaluation on the test site and prepare to measure the relationship between the test mileage (that is, test quantity) and the problem monitoring ratio (that is, test adequacy), so as to improve test efficiency and reduce test costs.

In the embodiment of the present disclosure, the problem record of each problem is recorded in a standardized manner, so that whether a newly discovered problem has been discovered previously may be determined based on the problem record, which may improve efficiency and reduce communication costs.

FIG. 4 schematically shows a block diagram of a testing device 400 of an autonomous vehicle according to an embodiment of the present disclosure.

As shown in FIG. 4, the device 400 includes an acquisition module 410, a first determination module 420, and a fitting module 430.

The acquisition module 410 is configured to acquire test data about a test site generated during a testing process, wherein the test data includes a corresponding relationship between a current cumulative number of problems monitored during the testing process and a current mileage of the autonomous vehicle. According to an embodiment of the present disclosure, the acquisition module 410 may, for example, perform the operation S201 described with reference to FIG. 2, which is not repeated here.

The first determination module 420 is configured to determine a corresponding relationship between a problem monitoring ratio and the current mileage based on the test data, wherein the problem monitoring ratio includes a ratio of the current cumulative number of problems monitored to a total number of problems monitored during the testing process. According to the embodiment of the present disclosure, the first determination module 420 may, for example, perform the operation S202 described with reference to FIG. 2, which is not repeated here.

The fitting module 430 is configured to perform fitting on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site during each testing process. According to the embodiment of the present disclosure, the fitting module 430 may, for example, perform the operation S203 described with reference to FIG. 2, which is not repeated here.

According to the embodiment of the present disclosure, the device 400 may further includes a second determination module and a testing module (not shown). The second determination module is configured to determine a test mileage to be tested by using the optimized evaluation model according to an expected problem monitoring ratio. The testing module is configured to test the autonomous vehicle based on the test mileage to be tested.

According to the embodiment of the present disclosure, the test data further includes a problem record of a problem monitored during the testing process, and the problem record includes at least one problem description each including at least one description tag.

According to the embodiment of the present disclosure, the device 400 further includes a recording module (not shown) configured to record the test data about the test site generated during the testing process. The recording the test data about the test site generated during the testing process includes: determining whether a problem having the same problem record as a new problem exists in monitored problems or not, in response to monitoring the new problem during the testing process; recording the problem record of the new problem and updating the current cumulative number of problem in response to determining a problem having the same problem record as the new problem does not exist in the monitored problems; and recording the corresponding relationship between the current cumulative number of problems and the current mileage.

According to the embodiment of the present disclosure, the recording the corresponding relationship between the current cumulative number of problems and the current mileage includes: acquiring updated current cumulative number of problems and the current mileage, and recording a corresponding relationship between the updated current cumulative number of problems and the current mileage, in response to updating the current cumulative number of problems; or acquiring, periodically, the current cumulative number of problems and the current mileage, and recording the corresponding relationship between the current cumulative number of problems and the current mileage.

According to the embodiment of the present disclosure, the preset evaluation model includes an exponential model.

According to an embodiment of the present disclosure, the preset evaluation model is expressed as:

$$ y = 1 - n^x $$

where y represents the problem monitoring ratio, x represents the current mileage, and n is a parameter of the preset evaluation model.

According to the embodiment of the present disclosure, the problem record includes at least one problem description selected from a static scene description, a dynamic interaction description, a dynamic interactive behavior description, and an unreasonable behavior description.

According to the embodiment of the present disclosure, the static scene description includes at least one description tag selected from a left turn at intersection, a right turn at intersection, a non-turn at intersection, a U-turn at intersection, a non-intersection travelling, a roundabout, an overpass, a branch road, a converging area, a main/auxiliary road, a ramp, and a temporary road construction. The dynamic interaction description may include at least one description tag selected from none, a vehicle, a pedestrian, a non-motor vehicle, and other obstacle. The dynamic interactive behavior description may include at least one description tag selected from none, side by side, vehicle following, lane changing, overtaking, pulling over, and starting. The unreasonable behavior description may include at least one description tag selected from unreasonable braking, braking without reason, unreasonable accelerating, too fast, too low, left and right swing, lateral deviation, position drift, too small lateral distance, positioning error, recognition error, violation of traffic regulations, redundant behavior, and inappropriate timing.

Any multiple of the modules, sub modules, units and sub units according to the embodiments of the present disclosure, or at least part of the functions of any number of them may be implemented in one module. Any one or more of the modules, sub modules, units and sub units according to the embodiments of the present disclosure may be split into multiple modules for implementation. Any one or more of the modules, sub modules, units and sub units according to the embodiments of the present disclosure may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable way that integrates or encapsulates the circuit, or may be implemented by any one of the three implementation modes of software, hardware and firmware or an appropriate combination thereof. Alternatively, one or more of the modules, sub modules, units and sub units according to the embodiments of the present disclosure may be at least partially implemented as a computer program module that, when executed, performs the corresponding functions.

For example, any multiple of the acquisition module 410, the first determination module 420 and the fitting module 430 may be integrated into one module for implementation, or any one of them may be split into multiple modules. Alternatively, at least part of the functions of one or more of these modules may be combined with at least part of the functions of other modules and implemented in one module. According to the embodiments of the present disclosure, at least one of the acquisition module 410, the first determination module 420 and the fitting module 430 may be may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable way that integrates or encapsulates the circuit, or may be implemented by any one of the three implementation modes of software, hardware and firmware or an appropriate combination thereof. Alternatively, at least one of the acquisition module 410, the first determination module 420 and the fitting module 430 may be at least partially implemented as a computer program module that, when executed, performs the corresponding functions.

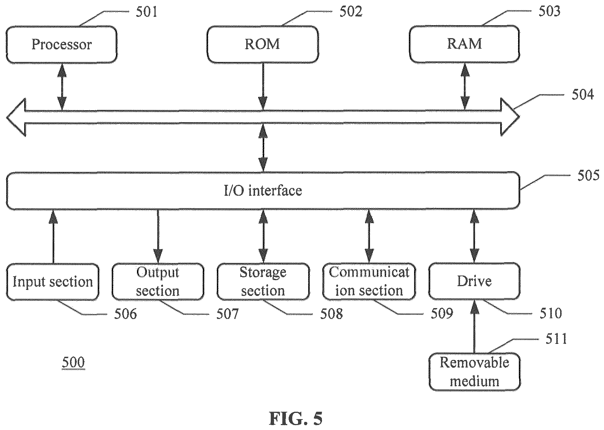

FIG. 5 schematically shows a block diagram of an electronic apparatus according to an embodiment of the present disclosure. The electronic apparatus shown in FIG. 5 is only an example, and should not bring any limitation to the function and scope of use of the embodiments of the present disclosure.

As shown in FIG. 5, an electronic apparatus 500 according to the embodiment of the present disclosure includes a processor 501, which may execute various appropriate actions and processing according to the program stored in a read only memory (ROM) 502 or the program loaded into a random access memory (RAM) 503 from a storage section 508. The processor 501 may, for example, include a general-purpose microprocessor (for example, CPU), an instruction set processor and/or a related chipset and/or a special-purpose microprocessor (for example, an application specific integrated circuit (ASIC)), and the like. The processor 501 may also include an on-board memory for caching purposes. The processor 501 may include a single processing unit or multiple processing units for executing different actions of the method flow according to the embodiments of the present disclosure.

Various programs and data required for the operation of the electronic apparatus 500 are stored in the RAM 503. The processor 501, the ROM 502 and the RAM 503 are connected to each other through a bus 504. The processor 501 executes various operations of the method flow according to the embodiments of the present disclosure by executing the programs in the ROM 502 and/or the RAM 503. It should be noted that the program may also be stored in one or more memories other than the ROM 502 and the RAM 503. The processor 501 may also execute various operations of the method flow according to the embodiments of the present disclosure by executing the programs stored in the one or more memories.

According to the embodiment of the present disclosure, the electronic apparatus 500 may further include an input/output (I/O) interface 505 which is also connected to the bus 504. The electronic apparatus 500 may further include one or more of the following components connected to the I/O interface 505: an input section 506 including a keyboard, a mouse, etc.; an output section 507 including a cathode ray tube (CRT), a liquid crystal display (LCD), etc. and a speaker, etc.; a storage section 508 including a hard disk, etc.; and a communication section 509 including a network interface card such as a LAN card, a modem, and the like. The communication section 509 performs communication processing via a network such as the Internet. A drive 510 is also connected to the I/O interface 505 as required. A removable medium 511, such as a magnetic disk, an optical disk, a magneto-optical disk, a semiconductor memory, and the like, is installed on the drive 510 as required, so that the computer program read therefrom is installed into the storage section 508 as needed.

The method flow according to the embodiments of the present disclosure may be implemented as a computer software program. For example, the embodiments of the present disclosure include a computer program product including a computer program carried on a computer-readable storage medium. The computer program includes a program code for execution of the method shown in the flowchart. In such an embodiment, the computer program may be downloaded and installed from the network through the communication section 509, and/or installed from the removable medium 511. When the computer program is executed by the processor 501, the above-mentioned functions defined in the system of the embodiment of the present disclosure are performed. According to the embodiments of the present disclosure, the above-described systems, apparatuses, devices, modules, units, etc. may be implemented by computer program modules.

The present disclosure also provides a non-transitory computer-readable storage medium, which may be included in the apparatus/device/system described in the above embodiments; or exist alone without being assembled into the apparatus/device/system. The above-mentioned computer-readable storage medium carries one or more programs that when executed, perform the method according to the embodiments of the present disclosure.

According to the embodiments of the present disclosure, the non-transitory computer-readable storage medium may be a non-volatile computer-readable storage medium, for example, may include but not limited to: portable computer disk, hard disk, random access memory (RAM), read-only memory (ROM), erasable programmable read-only memory (EPROM or flash memory), portable compact disk read-only memory (CD-ROM), optical storage device, magnetic storage device, or any suitable combination of the above. In the present disclosure, the computer-readable storage medium may be any tangible medium that includes or stores programs that may be used by or in combination with an instruction execution system, apparatus, or device. For example, according to the embodiments of the present disclosure, the computer-readable storage medium may include the above-mentioned ROM 502 and/or RAM 503 and/or one or more memories other than the ROM 502 and RAM 503.

The flowcharts and block diagrams in the drawings illustrate the possible architecture, functions, and operations of the system, method, and computer program product according to various embodiments of the present disclosure. In this regard, each block in the flowcharts or block diagrams may represent a part of a module, program segment, or code, which part includes one or more executable instructions for implementing the specified logical function. It should also be noted that, in some alternative implementations, the functions noted in the blocks may also occur in a different order than that noted in the accompanying drawings. For example, two blocks shown in succession may actually be executed substantially in parallel, or they may sometimes be executed in the reverse order, depending on the functions involved. It should also be noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

Those skilled in the art may understand that the various embodiments of the present disclosure and/or the features described in the claims may be combined in various ways, even if such combinations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

The embodiments of the present disclosure have been described above. However, these embodiments are for illustrative purposes only, and are not intended to limit the scope of the present disclosure. Although the embodiments have been described separately above, this does not mean that measures in the respective embodiments cannot be used in combination advantageously. The scope of the present disclosure is defined by the appended claims and their equivalents. Without departing from the scope of the present disclosure, those skilled in the art may make various substitutions and modifications, and these substitutions and modifications should all fall within the scope of the present disclosure.

**Claims**

1. A testing method of an autonomous vehicle, comprising:

   acquiring test data about a test site generated during a testing process, wherein the test data comprises a corresponding relationship between a current cumulative number of problems monitored during the testing process and a current mileage of the autonomous vehicle;
   determining a corresponding relationship between a problem monitoring ratio and the current mileage based on the test data, wherein the problem monitoring ratio comprises a ratio of the current cumulative number of problems monitored to a total number of problems monitored during the testing process; and
   performing fitting on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site during each testing process.

2. The method according to claim 1, further comprising:

   determining a test mileage to be tested by using the optimized evaluation model according to an expected problem monitoring ratio; and
   testing the autonomous vehicle based on the test mileage to be tested.

3. The method according to claim 1, wherein the test data further comprises a problem record of a problem monitored during the testing process, and the problem record comprises at least one problem description each comprising at least one description tag.

4. The method according to any of claims 1-3, further comprising:

recording the test data about the test site generated during the testing process;
wherein the recording the test data about the test site generated during the testing process comprises:

determining whether a problem having the same problem record as a new problem exists in monitored problems or not, in response to monitoring the new problem during the testing process;
recording the problem record of the new problem and updating the current cumulative number of problems in response to determining a problem having the same problem record as the new problem does not exist in the monitored problems; and
recording the corresponding relationship between the current cumulative number of problems and the current mileage.

5. The method according to any of claims 1-4, wherein the recording the corresponding relationship between the current cumulative number of problems and the current mileage comprises:

acquiring updated current cumulative number of problems and the current mileage, and recording a corresponding relationship between the updated current cumulative number of problems and the current mileage, in response to updating the current cumulative number of problems; or
acquiring, periodically, the current cumulative number of problems and the current mileage, and recording the corresponding relationship between the current cumulative number of problems and the current mileage.

6. The method according to claim 1, wherein the preset evaluation model comprises an exponential model.

7. The method according to any of claims 1-6, wherein the preset evaluation model is expressed as:

$$y = 1 - n^x$$

where y represents the problem monitoring ratio, x represents the current mileage, and n is a parameter of the preset evaluation model.

8. The method according to claim 3, wherein the problem record comprises at least one problem description selected from a static scene description, a dynamic interaction description, a dynamic interactive behavior description, and an unreasonable behavior description.

9. The method according to any of claims 1-8, wherein,
the static scene description comprises at least one description tag selected from a left turn at intersection, a right turn at intersection, a non-turn at intersection, a U-turn at intersection, a non-intersection travelling, a roundabout, an overpass, a branch road, a converging area, a main/auxiliary road, a ramp, and a temporary road construction;
the dynamic interaction description comprises at least one description tag selected from none, a vehicle, a pedestrian, a non-motor vehicle, and other obstacle;
the dynamic interactive behavior description comprises at least one description tag selected from none, side by side, vehicle following, lane changing, overtaking, pulling over, and starting; and
the unreasonable behavior description comprises at least one description tag selected from unreasonable braking, braking without reason, unreasonable accelerating, too fast, too low, left and right swing, lateral deviation, position drift, too small lateral distance, positioning error, recognition error, violation of traffic regulations, redundant behavior, and inappropriate timing.

10. A testing device of an autonomous vehicle, comprising:

an acquisition module configured to acquire test data about a test site generated during a testing process, wherein the test data comprises a corresponding relationship between a current cumulative number of problems monitored during the testing process and a current mileage of the autonomous vehicle;

a first determination module configured to determine a corresponding relationship between a problem monitoring ratio and the current mileage based on the test data, wherein the problem monitoring ratio comprises a ratio of the current cumulative number of problems monitored to a total number of problems monitored during the testing process; and

a fitting module configured to perform fitting on a preset evaluation model based on the corresponding relationship between the problem monitoring ratio and the current mileage, so as to obtain an optimized evaluation model, wherein the optimized evaluation model is configured to evaluate a corresponding relationship between the problem monitoring ratio and a test mileage about the test site during each testing process.

11. The device according to claim 10, further comprising:

a second determination module configured to determine a test mileage to be tested by using the optimized evaluation model according to an expected problem monitoring ratio; and

a testing module configured to test the autonomous vehicle based on the test mileage to be tested.

12. The device according to claim 10, wherein the test data further comprises a problem record of a problem monitored during the testing process, and the problem record comprises at least one problem description each comprising at least one description tag.

13. The device according to claim 12, further comprising:

a recording module configured to record the test data about the test site generated during the testing process; wherein the recording the test data about the test site generated during the testing process comprises:

determining whether a problem having the same problem record as a new problem exists in monitored problems or not, in response to monitoring the new problem during the testing process;

recording the problem record of the new problem and updating the current cumulative number of problem in response to determining a problem having the same problem record as the new problem does not exist in the monitored problems; and

recording the corresponding relationship between the current cumulative number of problems and the current mileage.

14. An electronic apparatus, comprising:

one or more processors; and

a storage device for storing one or more programs,

wherein the one or more programs, when executed by the one or more processors, cause the one or more processors to perform the method according to any of claims 1-9.

15. A non-transitory computer-readable medium having executable instructions stored thereon, wherein the executable instructions, when executed by a processor, causes the processor to perform the method according to any of claims 1-9.

100

101

102

103

**FIG. 1**

S201

Acquire test data about a test site generated during a testing process; the test data includes a corresponding relationship between a current cumulative number of problems monitored during the testing process and a current mileage of the autonomous vehicle

S202

Determine a corresponding relationship between a problem monitoring ratio and the current mileage based on the test data, wherein the problem monitoring ratio includes a ratio of the current cumulative number of problems monitored to a total number of problems monitored during the testing process.

S203

Perform fitting on a preset evaluation model based on the corresponding relationship between the problem monitoring ratio and the current mileage, so as to obtain an optimized evaluation model.

**FIG. 2**

**FIG. 3**

**FIG. 4**

501 Processor

502 ROM

503 RAM

504

505 I/O interface

Input section 506

Output section 507

Storage section 508

Communication section 509

Drive 510

500

511 Removable medium

**FIG. 5**

Europäisches
Patentamt

European
Patent Office

Office européen
des brevets

# EUROPEAN SEARCH REPORT

Application Number

EP 21 16 0720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/308619 A1 (ROSENBAUM WALTER STEVEN [IL]) 10 October 2019 (2019-10-10) * paragraph [0007] - paragraph [0021] * | 1-15 | INV. G01M17/007 G05D1/00 |
| A | US 2018/164825 A1 (MATUS JONATHAN [US] ET AL) 14 June 2018 (2018-06-14) * paragraph [0058] - paragraph [0063]; figure 1B * | 1-15 | |
| A | HUANG WULING ET AL: "Autonomous vehicles testing methods review", 2016 IEEE 19TH INTERNATIONAL CONFERENCE ON INTELLIGENT TRANSPORTATION SYSTEMS (ITSC), IEEE, 1 November 2016 (2016-11-01), pages 163-168, XP033028340, DOI: 10.1109/ITSC.2016.7795548 [retrieved on 2016-12-22] * section II * | 1-15 | |
| A | RYAN CIAN ET AL: "Spatial risk modelling of behavioural hotspots: Risk-aware path planning for autonomous vehicles", TRANSPORTATION RESEARCH PART A: POLICY AND PRACTICE, PERGAMON, AMSTERDAM, NL, vol. 134, 18 February 2020 (2020-02-18), pages 152-163, XP086087532, ISSN: 0965-8564, DOI: 10.1016/J.TRA.2020.01.024 [retrieved on 2020-02-18] * sections 1-3 * | 1-15 | TECHNICAL FIELDS SEARCHED (IPC) G01M G05D |

The present search report has been drawn up for all claims

| Place of search | Date of completion of the search | Examiner |
|---|---|---|
| Munich | 12 April 2021 | Tozlovanu, Ana-Delia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 16 0720

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2021

| Patent document cited in search report | | Publication date | Patent family member(s) | | Publication date |
|---|---|---|---|---|---|
| US 2019308619 | A1 | 10-10-2019 | NONE | | |
| US 2018164825 | A1 | 14-06-2018 | US | 2018164825 A1 | 14-06-2018 |
| | | | US | 2018292835 A1 | 11-10-2018 |
| | | | US | 2020257300 A1 | 13-08-2020 |

EPO FORM P0459

For more details about this annex : see Official Journal of the European Patent Office, No. 12/82